(19) Europäisches Patentamt
European Patent Office
Office européen des brevets

(11) **EP 2 418 133 A1**

(12) **EUROPEAN PATENT APPLICATION**
published in accordance with Art. 153(4) EPC

(43) Date of publication:
**15.02.2012 Bulletin 2012/07**

(21) Application number: **09843048.1**

(22) Date of filing: **10.04.2009**

(51) Int Cl.:
*B60T 8/171* (2006.01)    *B60K 20/02* (2006.01)
*B60T 8/30* (2006.01)     *B60W 40/12* (2012.01)
*G01G 19/03* (2006.01)

(86) International application number:
**PCT/JP2009/057716**

(87) International publication number:
**WO 2010/116542 (14.10.2010 Gazette 2010/41)**

(84) Designated Contracting States:
**AT BE BG CH CY CZ DE DK EE ES FI FR GB GR
HR HU IE IS IT LI LT LU LV MC MK MT NL NO PL
PT RO SE SI SK TR**

(71) Applicant: **Toyota Jidosha Kabushiki Kaisha
Toyota-shi, Aichi 471-8571 (JP)**

(72) Inventors:
• **KATO, Hideki**
**Toyota-shi**
**Aichi 471-8571 (JP)**

• **KAJITA, Hisashi**
**Toyota-shi**
**Aichi 471-8571 (JP)**

(74) Representative: **Albutt, Anthony John
D Young & Co LLP
120 Holborn
London EC1N 2DY (GB)**

(54) **WEIGHT-RELATED PHYSICAL QUANTITY ESTIMATING SYSTEM AND CONTROL DEVICE FOR VEHICLES**

(57)    A weight-related physical quantity estimating system and a control device according to the present invention are applied to a vehicle including a braking force changing device for changing the relationship between the braking force of front wheels and the braking force of rear wheels in accordance with the position of a displacement member which moves in accordance with the supporting load of the rear wheels. The weight-related physical quantity estimating system estimates the supporting load of the rear wheels on the basis of the braking forces of the front wheels and the rear wheels, and estimates at least one of the longitudinal position of the gravity center of the vehicle, the supporting load of the front wheels and the total weight of the vehicle, as a physical quantity relating to the weight of the vehicle. The control device modifies a value which is used for controlling the vehicle and is influenced by the physical quantities relating to the vehicle weight, on the basis of the braking forces of the front wheels and the rear wheels.

FIG. 3

```
                    START
110
              IS VEHICLE          No
              RUNNING ?
                 │ Yes
120
            ARE PERMISSION         No
             CONDITIONS
             SATISFIED ?
                 │ Yes
130
            IN OPPERATONAL         No
             AREA OF LSPV
                 │ Yes
200
          ESTIMATE SUPPORTING LOAD
            Wr OF REAR WHEELS
                (FIG. 2)
210
          ESTIMATE SUPPORTING LOAD
            Wf OF FRONT WHEELS
                (Wf=W-Wr)
220
             CAL. DISTANCE Lf
               (Lf=WrL/W)
230
             CAL. DISTANCE Lr
               (Lr=L-Lf)
240
          MODIFY VALUES USED FOR
            CONTROLLING VEHICLE

                   RETURN
```

EP 2 418 133 A1

**Description**

TECHNICAL FIELD

The present invention relates to a weight-related physical quantity estimating system and a control device for vehicles and, more particularly, to a weight-related physical quantities estimating system which estimates weight-related physical quantity such as longitudinal position of the gravity center of the vehicle and the like, and a control device which changes a value which is used for controlling the vehicle and is influenced by the physical quantities relating to the vehicle weight.

BACKGROUND ART

Conventionally, there have been proposed various types of devices which each estimates longitudinal position of the gravity center of a vehicle without detecting supporting load of each wheel in a vehicle such as an automobile or the like. For example, Japanese Patent Application Laid-Open (*kokai*) No. 2005-229446 discloses a device which estimates longitudinal position of the gravity center of a vehicle on the basis of information of slip rates of the front wheels and the rear wheels supplied from a control device that conducts anti-skid control of the front wheels and the rear wheels.

However, in the conventional estimation devices such as that described in the above laid-open publication, longitudinal position of the gravity center of a vehicle can not accurately be estimated. Therefore, in the present technical field, higher accuracy is sought in estimating longitudinal position of the gravity center of a vehicle. It is needed that a value which is used for controlling a vehicle is appropriately set in accordance with the actual longitudinal position of the gravity center of the vehicle.

DISCLOSURE OF THE INVENTION

A primary object of the present invention is, in a vehicle including a braking force changing device for changing the relationship between the braking force of front wheels and the braking force of rear wheels in accordance with the position of a displacement member which moves in accordance with the supporting load of the front wheels or the rear wheels, to estimate accurately longitudinal position of the gravity center of a vehicle and the like by effectively utilizing the operation of the braking force changing device and to set appropriately a value which is used for controlling the vehicle and is influenced by the physical quantities relating to the vehicle weight.

The present invention provides, in a vehicle including a braking force changing device for changing the relationship between the braking force of front wheels and the braking force of rear wheels in accordance with the position of a displacement member which moves in accordance with the supporting load of one of the front wheels and the rear wheels, a weight-related physical quantity estimating system for estimating at least one of the longitudinal position of the gravity center of the vehicle, the supporting load of the front wheels, the supporting load of the rear wheels and the total weight of the vehicle, as a physical quantity relating to the weight of the vehicle on the basis of the braking forces of the front wheels and the rear wheels.

According to this configuration, the relationship between the braking force of front wheels and the braking force of rear wheels is changed by the braking force changing device in accordance with the position of a displacement member. Accordingly, the supporting load of one of the front wheels and the rear wheels can be estimated on the basis of the braking force of the front wheels and the braking force of the rear wheels. Therefore, if the total weight of the vehicle is known, the supporting load of the other of the front wheels and the rear wheels and the longitudinal position of the gravity center of the vehicle can be estimated on the basis of the supporting load of the one of the front wheels and the rear wheels and the total weight of the vehicle.

If the relationship between the supporting load of one of the front wheels and the rear wheels and the total weight of the vehicle is known, the total weight of the vehicle can be estimated on the basis of the supporting load of one of the front wheels and the rear wheels. In addition, , the supporting load of the other of the front wheels and the rear wheels and the longitudinal position of the gravity center of the vehicle can be estimated on the basis of the supporting load of the one of the front wheels and the rear wheels and the total weight of the vehicle.

In these cases, the total weight of the vehicle is equal to the sum of the supporting load of the front wheels and the supporting load of the rear wheels, and the longitudinal position of the gravity center of the vehicle relative to the longitudinal positions of the front wheels and the rear wheels is determined by the reverse ratio of the supporting load of the front wheels and the supporting load of the rear wheels. Therefore, at least one of the longitudinal position of the gravity center of the vehicle, the supporting load of the front wheels, the supporting load of the rear wheels and the total weight of the vehicle can accurately be estimated as a physical quantity relating to the weight of the vehicle on the basis of the braking forces of the front wheels and the rear wheels. Further, devices for detecting the supporting loads of the wheels are not required.

The above-mentioned configuration may be such that: the vehicle has a shift-lock mechanism which permits shift operation of a transmission under the situation where the braking operation amount of the driver is equal to or greater than an unlock reference value; the braking force changing device changes the relationship under the situation where the braking operation amount of the driver is equal to or greater than a change reference value, which varies in accordance with the supporting load of the one of the front wheels and the rear wheels so that the change reference value is higher when the supporting load is high as compared with the case where the supporting load is low; and the unlock reference value is equal to or greater than a maximum change reference value which the change reference value assumes when the supporting load of the one of the front wheels and the rear wheels is a possible maximum value.

According to this configuration, unless the braking operation amount of the driver is equal to or greater than the maximum change reference value, the shift-lock mechanism does not permit shift operation of the transmission. Accordingly, when the driver is to start the vehicle, the amount of the braking operation amount of the driver surely becomes equal to or greater than the maximum change reference value. Therefore, when the vehicle is to be started, the relationship between the braking force of front wheels and the braking force of rear wheels can surely be changed by the braking force changing device, which enables to estimate the longitudinal position of the gravity center of the vehicle and the like without fail when the vehicle is started.

The above-mentioned configuration may be such that: the braking force changing device changes the relationship under the situation where the braking operation amount of the driver is equal to or greater than a change reference value, and the weight-related physical quantity estimating system estimates the supporting load of one of the front wheels and the rear wheels on the basis of the braking forces of the front wheels and the rear wheels which are values under the situation where the braking operation amount of the driver is equal to or greater than the change reference value, and estimates at least the longitudinal position of the gravity center of the vehicle or the supporting load of the other of the front wheels and the rear wheels on the basis of the supporting load of the one of the front wheels and the rear wheels and a known total weight of the vehicle.

According to this configuration, if the braking operation amount of the driver is equal to or greater than the maximum change reference value, the supporting load of one of the front wheels and the rear wheels can accurately be estimated on the basis of the braking forces of the front wheels and the rear wheels, and if the total weight of the vehicle is known, at least the longitudinal position of the gravity center of the vehicle or the supporting load of the other of the front wheels and the rear wheels can accurately be estimated on the basis of the supporting load of the one of the front wheels and the rear wheels and the total weight of the vehicle.

The above-mentioned configuration may be such that: the braking force changing device changes the relationship under the situation where the braking operation amount of the driver is equal to or greater than a change reference value, and the weight-related physical quantity estimating system estimates the total weight of the vehicle on the basis of the braking force of the vehicle and the deceleration of the vehicle which are values under the situation where the vehicle is being braked and the braking operation amount of the driver is smaller than the change reference value.

When the vehicle is being braked and the braking operation amount of the driver is smaller than the change reference value, the total weight of the vehicle is proportional to a value of the braking force of the vehicle divided by the deceleration of the vehicle. According to the above configuration, the total weight of the vehicle can accurately be estimated on the basis of the braking force of the vehicle and the deceleration of the vehicle.

The present invention also provides, in a vehicle including a braking force changing device for changing the relationship between the braking force of front wheels and the braking force of rear wheels in accordance with the position of a displacement member which moves in accordance with the supporting load of one of the front wheels and the rear wheels, a control device for modifying a value which is used for controlling the vehicle and is influenced by the physical quantities relating to the vehicle weight, on the basis of the braking forces of the front wheels and the rear wheels.

According to this configuration, the relationship between the braking force of front wheels and the braking force of rear wheels is changed by the braking force changing device in accordance with the position of a displacement member which moves in accordance with the supporting load of one of the front wheels and the rear wheels. Accordingly, the braking force of the front wheels and the braking force of the rear wheels reflect the supporting load of one of the front wheels and the rear wheels, and further reflect the supporting load of the other of the front wheels and the rear wheels and the longitudinal position of the gravity center of the vehicle.

Therefore, by modifying the value which is used for controlling the vehicle and is influenced by the physical quantities relating to the vehicle weight, on the basis of the braking forces of the front wheels and the rear wheels, it is possible to modify appropriately the value which is used for controlling the vehicle in accordance with the variations of the physical quantities relating to the vehicle weight such as the supporting load of one of the front wheels and the rear wheels and the like.

The above-mentioned configuration may be such that: the control device estimates at least one of the longitudinal position of the gravity center of the vehicle, the supporting load of the front wheels, the supporting load of the rear wheels and the total weight of the vehicle, as a physical quantity relating to the weight of the vehicle on the basis of the braking forces of the front wheels and the rear wheels, and modifies the value which is used for controlling the vehicle on the basis of the estimated value or values.

According to this configuration, at least one of the longitudinal position of the gravity center of the vehicle, the supporting load of the front wheels, the supporting load of the rear wheels and the total weight of the vehicle can be estimated as a physical quantity relating to the weight of the vehicle on the basis of the braking forces of the front wheels and the rear wheels, and the value which is used for controlling the vehicle can appropriately be modified on the basis of the estimated physical quantity relating to the weight of the vehicle.

The above-mentioned configuration may be such that: the braking force changing device changes the relationship under the situation where the braking operation amount of the driver is equal to or greater than a change reference value, and the control device estimates the supporting load of one of the front wheels and the rear wheels on the basis of the braking forces of the front wheels and the rear wheels which are values under the situation where the braking operation amount of the driver is equal to or greater than the change reference value, and estimates at least the longitudinal position of the gravity center of the vehicle or the supporting load of the other of the front wheels and the rear wheels on the basis of the supporting load of the one of the front wheels and the rear wheels and a known total weight of the vehicle.

According to this configuration, if the braking operation amount of the driver is equal to or greater than the maximum change reference value, the supporting load of one of the front wheels and the rear wheels can accurately be estimated on the basis of the braking forces of the front wheels and the rear wheels, and if the total weight of the vehicle is known, at least the longitudinal position of the gravity center of the vehicle or the supporting load of the other of the front wheels and the rear wheels can accurately be estimated on the basis of the supporting load of the one of the front wheels and the rear wheels and the total weight of the vehicle.

The above-mentioned configuration may be such that: the braking force changing device changes the relationship under the situation where the braking operation amount of the driver is equal to or greater than a change reference value, and the control device estimates the total weight of the vehicle on the basis of the braking force of the vehicle and the deceleration of the vehicle which are values under the situation where the vehicle is being braked and the braking operation amount of the driver is smaller than the change reference value.

When the vehicle is being braked and the braking operation amount of the driver is smaller than the change reference value, the total weight of the vehicle is proportional to a value of the braking force of the vehicle divided by the deceleration of the vehicle. According to the above configuration, the total weight of the vehicle can accurately be estimated on the basis of the braking force of the vehicle and the deceleration of the vehicle.

The above-mentioned configuration may be such that: the weight-related physical quantity estimating system stores the relationship among the supporting load of one of the front wheels and the rear wheels, the braking force of front wheels and the braking force of rear wheels, and estimates at least one of the longitudinal position of the gravity center of the vehicle, the supporting load of the front wheels, the supporting load of the rear wheels and the total weight of the vehicle on the basis of the braking forces of the front wheels and the rear wheels and the stored relationship.

Similarly, the above-mentioned configuration may be such that: the control device stores the relationship among the supporting load of one of the front wheels and the rear wheels, the braking force of front wheels and the braking force of rear wheels, and estimates at least one of the longitudinal position of the gravity center of the vehicle, the supporting load of the front wheels, the supporting load of the rear wheels and the total weight of the vehicle on the basis of the braking forces of the front wheels and the rear wheels and the stored relationship.

The above-mentioned configuration may be such that: the braking force changing device changes the relationship between the braking force of front wheels and the braking force of rear wheels in accordance with the position of a displacement member which moves in accordance with the supporting load of one of the rear wheels.

The above-mentioned configuration may be such that: the braking force changing device changes the relationship between the braking force of front wheels and the braking force of rear wheels so that the changing rate of the braking force of the rear wheels is smaller that the changing rate of the braking force of the front wheels.

The above-mentioned configuration may be such that: the braking force changing device is a load sensing proportioning valve.

The above-mentioned configuration may be such that: the value which is used for controlling the vehicle and is influenced by the physical quantities relating to the vehicle weight is at least one of stability factor of the vehicle, lateral acceleration of the vehicle and a vehicle body speed of the vehicle.

BRIEF DESCRIPTION OF THE DRAWINGS

FIG. 1 is a schematic diagram showing a first embodiment of a weight-related physical quantity estimating system.
FIG. 2 is a diagram showing the relationship between the braking pressure Pbf of the front wheels and the braking pressure Pbr of the rear wheels achieved by the operation of LSPV under the situation where braking forces of the wheels are controlled in normal control mode.

FIG. 3 is a flowchart showing a routine for estimating weight-related physical quantities in the first embodiment.

FIG. 4 is a flowchart showing a routine for estimating total weight of the vehicle in the first embodiment.

FIG. 5 is a schematic diagram showing a second embodiment of a weight-related physical quantity estimating system.

FIG. 6 is a flowchart showing an essential portion of a routine for estimating weight-related physical quantities in the second embodiment.

FIG. 7 is a schematic diagram showing a third embodiment of a weight-related physical quantity estimating system.

FIG. 8 is a flowchart showing an essential portion of a routine for estimating weight-related physical quantities in the third embodiment.

FIG. 9 is a graph showing the relationship between master cylinder pressure Pm and deceleration Gxb of the vehicle achieved by the operation of LSPV under the situation where braking forces of the wheels are controlled in normal control mode in a fourth embodiment of a weight-related physical quantity estimating system.

FIG. 10 is a flowchart showing an essential portion of a routine for estimating weight-related physical quantities in the fourth embodiment.

FIG. 11 is a diagram showing a manner for calculating supporting load Wr of the rear wheels on the basis of the deceleration Gxb at breaking point in the fourth embodiment.

BEST MODE FOR CARRYING OUT THE INVENTION

The present invention will now be described in detail with respect to preferred embodiments by referring to the accompanying drawings.

First Embodiment

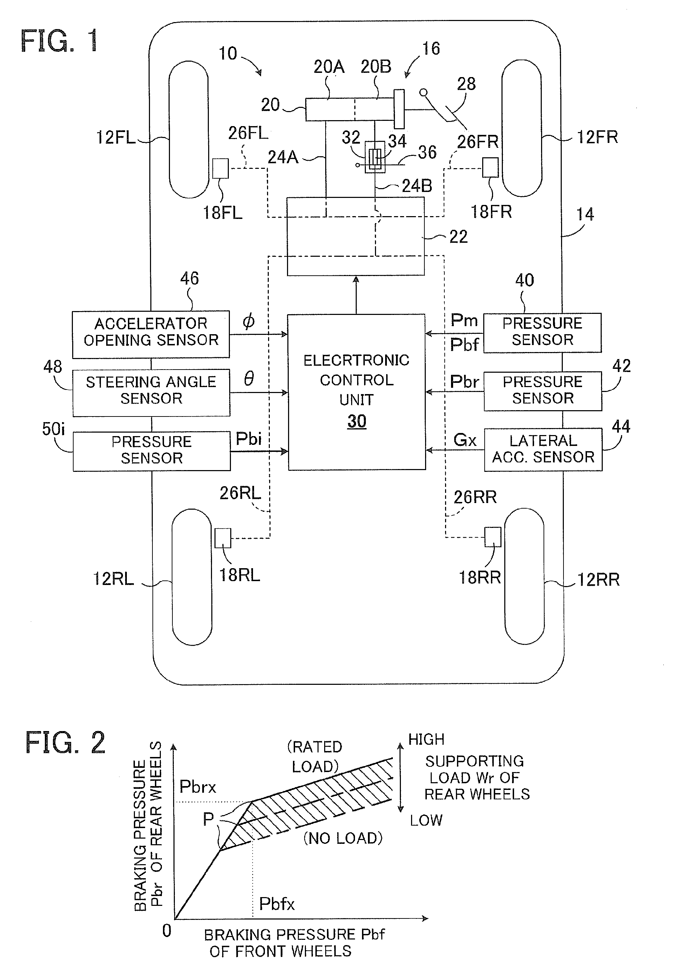

FIG. 1 is a schematic diagram showing a first embodiment of a weight-related physical quantity estimating system.

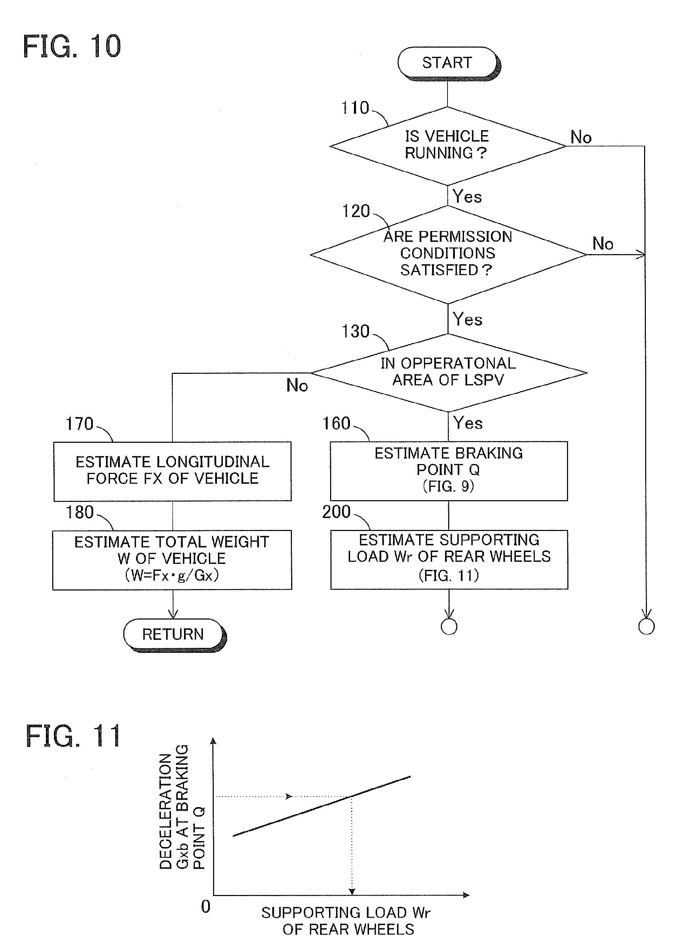

In FIG. 1, 10 denotes an entire weight-related physical quantity estimating system. 12FL, 12FR denote left and right front wheels, respectively, of a vehicle 14 and 12RL, 12RR denote left and right rear wheels, respectively. Although not shown in FIG. 1, the left and right front wheels 12FL, 12FR, which are steerable wheels, are steered by a power steering apparatus of a rack and pinion type via tie rods. The steering apparatus is driven in response to steering operation of a steering wheel by a driver. It is to be noted that the vehicle 14 may be either of front-wheel drive vehicle, rear-wheel drive vehicle and four-wheel drive vehicle.

Braking forces of the wheels are controlled through control of respective braking pressures of associated wheel cylinders 18FL, 18FR, 18RL, 18RR by a braking apparatus 16. The braking apparatus 16 includes a master cylinder 20 and a brake actuator 22. The master cylinder 20 has a master cylinder chamber 20A for the front wheels and a master cylinder chamber 20B for the rear wheels. The master cylinder chamber 20A for the front wheels and a master cylinder chamber 20B for the rear wheels are connected with the brake actuator 22 by a conduit 24A for the front wheels and a conduit 24B for the rear wheels, respectively. The brake actuator 22 includes a reservoir, an oil pump, and various valve units, etc. which are not shown, and is connected with wheel cylinders 18FL- 18RR by individual conduits 26FL - 26RR for the wheels.

The brake actuator 22 usually connects the conduit 24A for the front wheels with the conduits 26FL, 26FR for the front wheels 12FL, 12FR and connects the conduit 24B for the rear wheels with the conduits 26RL, 26RR for the rear wheels 12RL, 12RR (normal control mode). In the normal control mode, the pressures in the master cylinder chambers 20A and 20B are increasingly and decreasingly controlled by means of operation of a brake pedal 28 by the driver. The pressures in the master cylinder chambers 20A and 20B are introduced to the wheel cylinders 18FL, 18FR for the left and right front wheels and the wheel cylinders 18RL, 18RR for the left and right rear wheels, respectively, whereby braking forces of the wheels are controlled to values determined in accordance with braking operation amount by the driver.

In contrast, in an individual control mode in which braking force of each wheel is individually controlled, the brake actuator 22 shuts down the connections between the wheel cylinders of the wheels and the master cylinder 20 and controls the connections between the wheel cylinders and either of the reservoir and the oil pump by means of the control of pressure increasing and decreasing control valves and the like, not shown, so as to control the pressures in the wheel cylinders of the wheels. The oil pump and various valve units and the like are controlled by a braking force control part of an electronic control unit 30.

It is to be noted that although not illustrated in FIG. 1, the master cylinder 20 is provided with a stroke simulator which allows the driver to depress the brake pedal 28 under the situation where the connections between the wheel cylinders of the wheels and the master cylinder 20 are shut down and thereby allows the driver to increase and decrease the pressure in the master cylinder 20.

The conduit 24B for the rear wheels is provided with a load sensing proportioning valve 32, which is referred to LSPV for short in this Description. LSPV 32 has a valve element 34 which controls communication degree between the conduit 24B on the side of the master cylinder 20 and the conduit 24B on the side of the brake actuator 22. The valve element 34 is actuated by a displacement member 36 such as a lever to control the communication degree. The displacement member 36 displaces by the change of the vertical relative positional relationship between a sprung member and an unsprung member which is caused by the variation in the supporting load of the rear wheels 12RL, 12RR.

The vehicle 14 has a pressure sensor 40 for detecting pressure in the conduit 24A for the front wheels as master cylinder pressure Pm or braking pressure Pbf of the front wheels, and a pressure sensor 42 for detecting, as braking pressure Pbr of the rear wheels, pressure in the conduit 24B between LSPV 32 and the brake actuator 22. The vehicle 14 has a longitudinal acceleration sensor 44 for detecting longitudinal acceleration Gx of the vehicle, which assumes a positive value when it is in drive direction, and an accelerator opening sensor 46 for detecting, as accelerator opening $\phi$, depression amount of an accelerator pedal not shown in FIG. 1 by the driver.

The vehicle 14 has a steering sensor 48 for detecting steering angle $\theta$ which represent steering operation amount by the driver. Further, the wheel cylinders 18FL - 18RR are provided with pressure sensors 50i (i= fl, fr, rl, rr) for detecting pressures Pi (i= fl, fr, rl, rr) in the respective wheel cylinders as braking pressures of the respective wheels. It should be noted that the vehicle 14 has various other sensors for acquiring other information such as vehicle speed V required for vehicle control.

The output signals of the sensors are fed to the electronic control unit 30. Although not shown in detail in FIG. 1, the electronic control unit 30 includes a micro computer having a CPU, a ROM, a RAM, input/output ports, etc. which are connected with one another by bi-directional common bus, and a drive circuit.

FIG. 2 shows the relationship between the braking pressure Pbf (=Pm) of the front wheels and the braking pressure Pbr of the rear wheels achieved by the operation of LSPV 32 under the situation where braking forces of the wheels are controlled in normal control mode. As shown, the ratio of the variation in the braking pressure Pbr of the rear wheels relative to the variation in the braking pressure Pbf of the front wheels decreases in the area where the braking pressure Pbf of the front wheels is greater than a break point P. The value of the braking pressure Pbf of the front wheels at the break point P increases in accordance with increase in the supporting load Wr of the rear wheels 12RL, 12RR.

It is to be noted that the relationship among the braking pressure Pbf of the front wheels, the braking pressure Pbr of the rear wheels and the supporting load Wr of the rear wheels shown in FIG. 2 is derived in advance for each vehicle by experiment, for example, and the braking force control part of the electronic control unit 30 stores the relationship shown in FIG. 2 as a map in a storing device such as ROM.

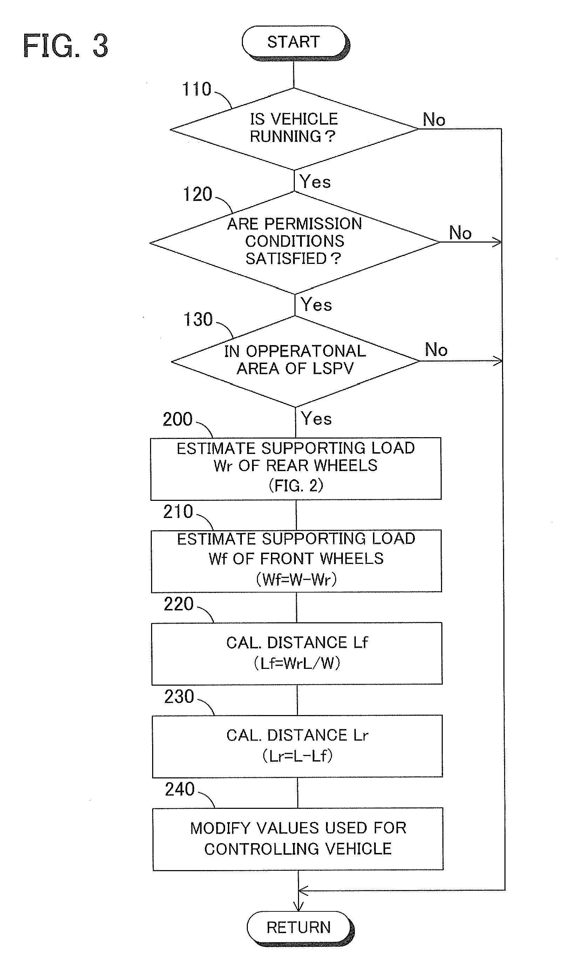

The electronic control unit 30, by following a flowchart shown in FIG. 3, calculates supporting load Wr of the rear wheels on the basis of the braking pressure Pbf of the front wheels and the braking pressure Pbr of the rear wheels. The electronic control unit 30 calculates longitudinal distances Lf and Lr between the gravity center of the vehicle 14 and front and rear axles which indicate the longitudinal position of the gravity center of the vehicle. Further, the electronic control unit 30 modifies values such as a stability factor which are used for controlling the vehicle and are influenced by weight-related physical quantities of the vehicle on the basis of the distances Lf and Lr or the like.

Next, a routine for estimating weight-related physical quantities in the first embodiment will be described with reference to the flowchart shown in FIG. 3. The estimation control according to the flowchart shown in FIG. 3 is started when an ignition switch is turned on, and is repeatedly executed at predetermined time intervals.

First, in step 110, a decision is made as to whether or not the vehicle is running. If a negative decision is made, the control according to the flowchart shown in FIG. 3 is once terminated, whereas if a positive decision is made, the control proceeds to step 120.

In step 120, a decision is made as to whether or not permission conditions for estimating weight-related physical quantities are satisfied. If a negative decision is made, the control according to the flowchart shown in FIG. 3 is once terminated, whereas if a positive decision is made, the control proceeds to step 130.

In this connection, the decision may be made that permission conditions for estimating weight-related physical quantities are satisfied when the following three conditions are satisfied, for example:

(1) Braking is being conducted.
(2) Anti-skid control is not executed.
(3) The vehicle is not turning.

In step 130, a decision is made as to whether or not the braking pressure Pbf of the front wheels and the braking pressure Pbr of the rear wheels are in the operational area of LSPV 32, that is, whether or not the braking pressure Pbf of the front wheels and the braking pressure Pbr of the rear wheels are in the hatched area shown in FIG. 2. If a negative decision is made, the control according to the flowchart shown in FIG. 3 is once terminated, whereas if a positive decision is made, the control proceeds to step 200.

In step 200, supporting load Wr of the rear wheels is calculated from a map corresponding to FIG. 2 on the basis of the braking pressure Pbf of the front wheels and the braking pressure Pbr of the rear wheels. In step 210, supporting load Wf of the front wheels is calculated by subtracting the supporting load Wr of the rear wheels from total weight W of the vehicle.

In step 220, the longitudinal distance Lf between the gravity center of the vehicle and the front axle is calculated according to the under-mentioned Equation 1, in which L is wheel base of the vehicle. In step 230, the longitudinal distance Lr between the gravity center of the vehicle and the rear axle is calculated by subtracting the distance Lf from the wheel base L of the vehicle.

$$Lf = Wr \cdot L/W \quad \cdots(1)$$

In step 240, if any of supporting load Wf of the front wheels, supporting load Wr of the rear wheels, and longitudinal distances Lf and Lr of the vehicle stored in a non-volatile rewritable storing device is different from the corresponding value calculated as above, it is rewritten to the latter value. The values which are used for controlling the vehicle and are influenced by the supporting load Wf of the front wheels, the supporting load Wr of the rear wheels, and/or the longitudinal distances Lf and Lr of the vehicle among the weight-related physical quantities of the vehicle are modified in accordance with the values as calculated above.

For example, stability factor Kh is represented by the following Equation 2, in which Kf and Kr are cornering power of the front and the rear wheels, respectively and g is a gravitational acceleration:

$$Kh = \frac{W}{gL^2}\left(\frac{Lr}{Kf} - \frac{Lf}{Kr}\right) \quad \cdots(2)$$

In general, lateral acceleration of a vehicle is represented as that at the gravity center of the vehicle and vehicle body speed is represented as the velocity of the gravity center. Accordingly, when the longitudinal distances Lf and Lr which indicate the longitudinal position of the gravity center of the vehicle 14 is different from those stored in the storing device, the lateral acceleration of the vehicle and the vehicle body speed are modified on the basis of the calculated distances Lf and Lr so that the position of the gravity center used in the vehicle control coincides with the longitudinal position of the gravity center determined by the above calculated values.

It should be understood that the values which are used for controlling the vehicle and are influenced by the weight-related physical quantities of the vehicle are not limited to the above exemplified values but may be any values which are used for controlling the vehicle and are influenced by at least any one of the supporting load Wf of the front wheels, the supporting load Wr of the rear wheels and the longitudinal distances Lf and Lr of the vehicle.

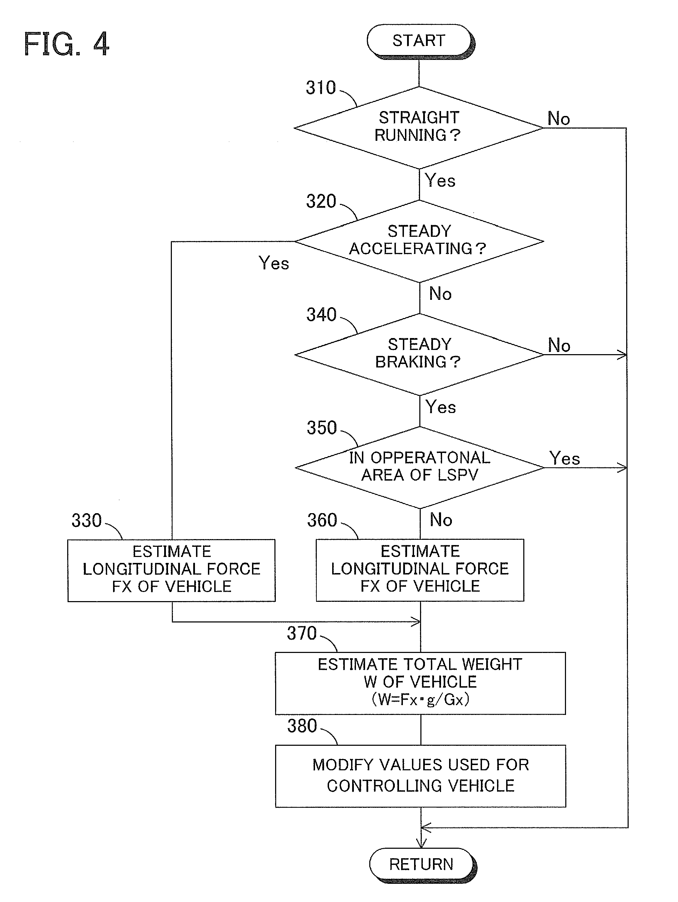

Further, the electronic control unit 30, by following a flowchart shown in FIG. 4, calculates longitudinal force Fx of the vehicle 14 when the vehicle is under the steady straight running accelerating condition, i.e. the straight running accelerating condition in which changing rate of acceleration is small or the vehicle is under the steady straight running braking condition, i.e. the straight running decelerating condition in which changing rate of deceleration is small, and calculates total weight W of the vehicle on the basis of the longitudinal force Fx of the vehicle and longitudinal acceleration Gx of the vehicle.

Next, a routine for estimating total weight of the vehicle in the first embodiment will be described with reference to the flowchart shown in FIG. 4. The estimation control according to the flowchart shown in FIG. 4 is executed by interruption at predetermined time intervals.

First, in step 310, a decision is made as to whether or not an absolute value of steering angle θ and an absolute value of time differential of steering angle θ are not above respective reference values. If a negative decision is made, the control according to the flowchart shown in FIG. 4 is once terminated, whereas if a positive decision is made, the control proceeds to step 320.

In step 320, a decision is made as to whether or not the vehicle is under the steady accelerating condition. If a negative decision is made, the control proceeds to step 340, whereas if a positive decision is made, the control proceeds to step 330. In this connection, the decision may be made that the vehicle is under the steady accelerating condition when the accelerator opening φ is a positive value; the absolute value of time differential of the accelerator opening φ is not greater than a reference value; and traction control is not executed.

In step 330, the longitudinal force Fx of the vehicle which is driving force and a positive value is calculated on the basis of the information of output torque of an engine input form an engine control part of the electronic control unit 30 and the information of transmission gear ratio of the transmission input from a transmission control part of the control unit, and subsequently the control proceeds to step 370.

In step 340, a decision is made as to whether or not the vehicle is under the steady braking condition. If a negative decision is made, the control according to the flowchart shown in FIG. 4 is once terminated, whereas if a positive decision is made, the control proceeds to step 350.

In this connection, the decision may be made that the vehicle is under the steady braking condition when the braking pressure Pbf of the front wheels is a positive value; the absolute value of time differential of the braking pressure Pbf of the front wheels is not greater than a reference value; and anti-skid control is not executed.

In step 350, a decision is made as to whether or not the braking pressure Pbf of the front wheels and the braking pressure Pbr of the rear wheels are in the operational area of LSPV 32. If a positive decision is made, the control according to the flowchart shown in FIG. 4 is once terminated, whereas if a negative decision is made, the control proceeds to step 360.

In step 360, the longitudinal force Fx of the vehicle which is braking force and a negative value is calculated on the basis of the braking pressure Pbf of the front wheels and the braking pressure Pbr of the rear wheels, and subsequently the control proceeds to step 370.

In step 370, total weight W of the vehicle is calculated according to the under-mentioned Equation 3 on the basis of the longitudinal force Fx of the vehicle and longitudinal acceleration Gx of the vehicle.

$$W = Fx \cdot g / Gx \quad \cdots (3)$$

In step 380, if the total weight W of the vehicle stored in a non-volatile rewritable storage is different from the corresponding value calculated as above, it is rewritten to the latter value. The values such as stability factor Kh represented by the above Equation 2 which are used for controlling the vehicle and are influenced by the total weight W of the vehicle among the weight-related physical quantities of the vehicle are modified in accordance with the value as calculated above.

It should be understood that the values which are used for controlling the vehicle and are influenced by the total weight W of the vehicle are not limited to the stability factor Kh but may be any values which are used for controlling the vehicle and are influenced by the total weight W of the vehicle.

As will be understood from the above description, according to the first embodiment, under the situation where the vehicle is running; permission conditions for estimation are satisfied; and the braking pressures of the front and rear wheels are in the operational area of LSPV 32, affirmative decisions are made in steps 110 to 130 and steps 200 to 240 are executed. Accordingly, when the vehicle is running; permission conditions for estimation are satisfied; and the braking pressures of the front and rear wheels are in the operational area of LSPV 32, supporting load Wf of the front wheels, supporting load Wr of the rear wheels, and longitudinal distances Lf and Lr of the vehicle can reliably be calculated on the basis of the braking pressure Pbf of the front wheels and the braking pressure Pbr of the rear wheels.

Second Embodiment

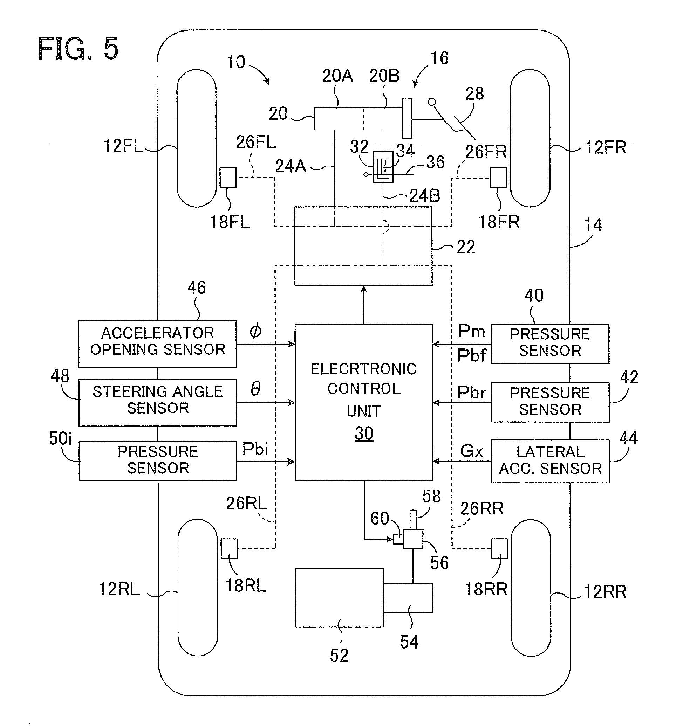

FIG. 5 is a schematic diagram showing a second embodiment of a weight-related physical quantity estimating system.

In the second embodiment, the braking apparatus 16 is configured in a manner similar to that of the above-described first embodiment and the braking forces of the wheels are increased or decreased by means of the braking pressures of the wheel cylinders 18FL, 18FR, 18RL, 18RR being increased or decreased by the braking apparatus 16. LSPV 32 is provided at the conduit 24B on the side of the master cylinder 20 as in the above-described first embodiment.

The driving force of the vehicle is generated by means of the driving force of an engine 52 being transmitted to drive wheels by way of an automatic transmission 54. The output of the engine 52 and transmission gear ratio of the automatic transmission 54 are controlled by engine control part and transmission control part, respectively, of the electronic control unit 30. Transmission shift of the automatic transmission 54 is also conducted by means of a shift lever 58 of a shift unit 56 being operated by the driver.

The shift unit 56 has a shift-lock mechanism 60 which prevents the shift lever 58 from being moved and the shift-lock mechanism 60 is controlled by transmission control part of the electronic control unit 30.

The shift-lock mechanism 60 permits the shift lever 58 to be moved under the situation where the braking pressure Pbf of the front wheels, that is the pressure in the wheel cylinders 18FL, 18FR for left and right front wheels is equal to or greater than an unlock reference value Pbfp (a positive constant) when the vehicle 14 is to be started, and thereby permits the transmission operation of the automatic transmission 54. Accordingly, the driver can not move the shift lever 58 from P or N range to running rage such as D range unless he or she depresses the brake pedal 28 to increase the pressure in the master cylinder chamber 20A for the front wheels to a value equal to or greater than the unlock reference value Pbfp.

In the second embodiment, the unlock reference value Pbfp of the shift-lock mechanism 60 is set to a value which is equal to or greater than the value Pbfx which is the braking pressure Pbf of the front wheels at the breaking point P when the supporting load Wr of the rear wheels 12RL, 12RR is a maximum value, that is, a value when the vehicle load is a rated load. Accordingly, when the driver moves the shift lever 58 from P or N range to running rage such as D range so as to start the vehicle, the braking pressure Pbf of the front wheels is increased without fail to a value which is equal to or greater than the value Pbfx, that is a value within the operational area of LSPV 32.

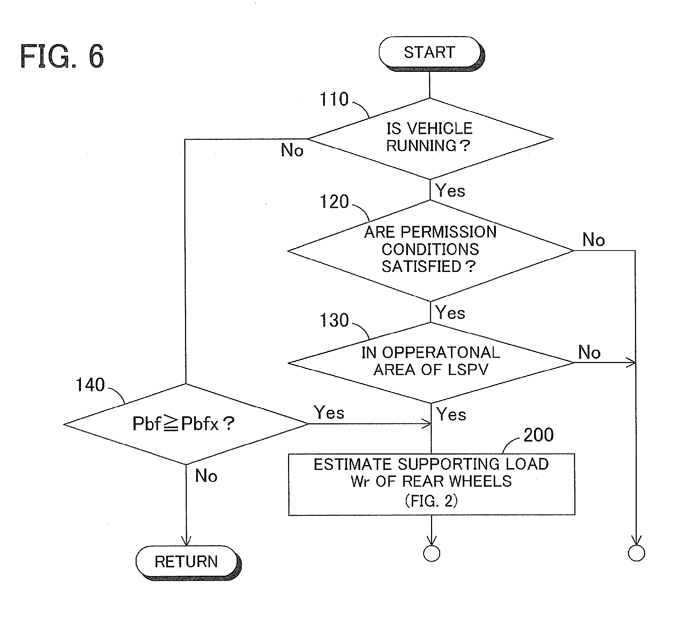

The electronic control unit 30, by following a flowchart shown in FIG. 6, calculates supporting load Wr of the rear wheels on the basis of the braking pressure Pbf of the front wheels and the braking pressure Pbr of the rear wheels. The electronic control unit 30 calculates longitudinal distances Lf and Lr between the gravity center of the vehicle 14 and front and rear axles which indicate longitudinal position of the gravity center of the vehicle. In FIG. 6, the same steps as those shown in FIG. 3 are denoted by the same step numbers as in FIG. 3. This is also applied to the other embodiments to be described later.

As shown in FIG. 6, in the case where a negative decision is made in step 110, in step 140, a decision is made as to whether or not the braking pressure Pbf of the front wheels is equal to or greater than the value Pbfx. If a negative decision is made, the control according to the flowchart shown in FIG. 6 is once terminated, whereas if a positive decision is made, the control proceeds to step 200 and steps 210 to 240 are conducted similarly to the above-described first embodiment.

It is to be noted that in the second embodiment, total weight W of the vehicle is calculated similarly to the above-described first embodiment according to the flowchart shown in FIG. 4. This is also applied to the third embodiment to be described later.

As described above, when the driver moves the shift lever 58 from P or N range to running rage such as D range so as to start the vehicle, the braking pressure Pbf of the front wheels is increased without fail to a value which is equal to or greater than the value Pbfx. Accordingly, if a negative decision is made in step 110, a positive decision is made without fail in step 140 and steps 200 to 240 are conducted.

Therefore, according to the second embodiment, the distance Lf and the like can be calculated, similarly to the above-described first embodiment, under the situation where the vehicle is running; permission conditions for estimation are satisfied; and the braking pressures of the front and rear wheels are in the operational area of LSPV 32, and they can as well be calculated when the vehicle is to be started.

Third Embodiment

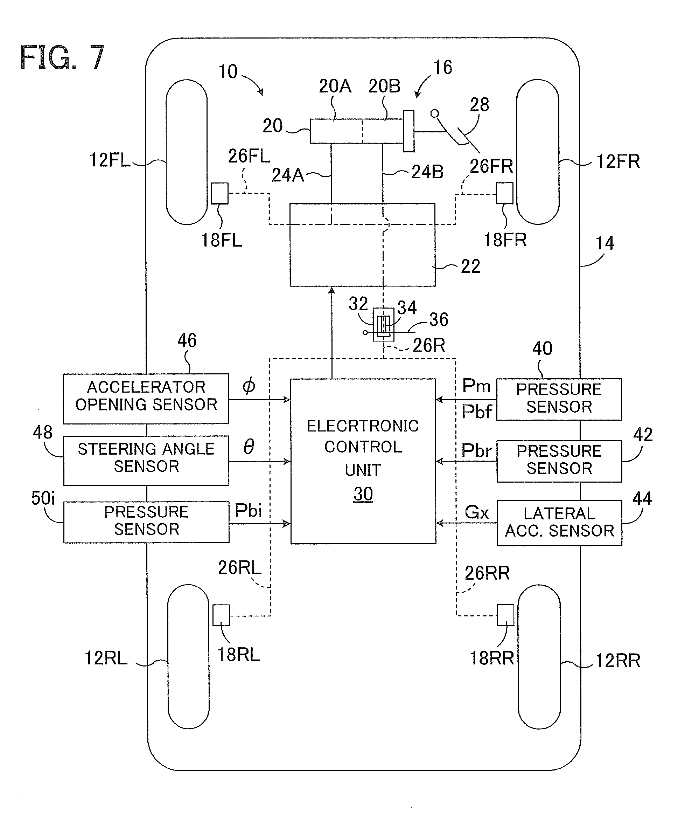

FIG. 7 is a schematic diagram showing a third embodiment of a weight-related physical quantity estimating system.

In the third embodiment, the braking apparatus 16 is configured basically in a manner similar to that of the above-described first and second embodiments but LSPV 32 is provided at the conduit 26R common to the left and right rear wheels 12RL and 12RR.

In the third embodiment, when no braking control is conducted, that is, when the ignition switch, not shown in the figure, is turned off and no electric current is supplied to the control valves and the like, the brake actuator 22 connects the conduit 24A for the front wheels with the conduits 26FL, 26FR for the front wheels 12FL, 12FR and connects the conduit 24B for the rear wheels with the conduits 26RL, 26RR for the rear wheels 12RL, 12RR via the common conduit 26R (non-control mode).

The pressures in the master cylinder chambers 20A and 20B are increasingly and decreasingly controlled by means of operation of a brake pedal 28 by a driver. In the non-control mode, the pressures in the master cylinder chambers 20A and 20B are introduced to the wheel cylinders 18FL, 18FR for left and right front wheels and the wheel cylinders 18RL, 18RR for left and right rear wheels, respectively, whereby braking forces of the wheels are controlled to values determined in accordance with braking operation amount by the driver.

In the normal control mode, the brake actuator 22 shuts down the connection between the wheel cylinders of the wheels and the master cylinder 20 and establishes communication between the wheel cylinders 18FL to 18RR and a pressure increase/decrease control part common to all the wheels which increase or decrease the pressure by controlling pressure increase and decrease control valves. Accordingly, the pressures in the wheel cylinders of all the wheels are simultaneously controlled by the pressure increase/decrease control part common to all the wheels.

In the normal control mode, when the master cylinder pressure Pm is increased or decreased by means of the brake pedal 28 bein operated by the driver, the brake actuator 22 controls the pressure increase/decrease control part common to all the wheels so that the pressure Pbt controlled by the common control part coincides with a value which is a product of the master cylinder pressure Pm and a pressure increasing factor.

Therefore, when the pressure Pbt is blow the reference pressure Pbfx of LSPV 32, the pressures in the wheel cylinders 18FL to 18RR of the wheels are controlled to the pressure Pbt. In contrast, when the pressure Pbt is equal to or above the reference pressure Pbfx of LSPV 32, the pressures in the wheel cylinders 18FL and 18FR of the left and right front wheels are controlled to the pressure Pbt but the pressures in the wheel cylinders 18RL and 18RR of the left and right rear wheels are controlled to a pressure lower than the pressure Pbt by the operation of LSPV 32.

In an individual control mode in which braking force of each wheel is individually controlled, the brake actuator 22 shuts down the connection between the wheel cylinders 18FL to 18RR of the wheels and the master cylinder 20 and connects the pressure increase/decrease control parts for the wheels with the respective wheel cylinders to thereby individually control the pressures in the wheel cylinders of the wheels.

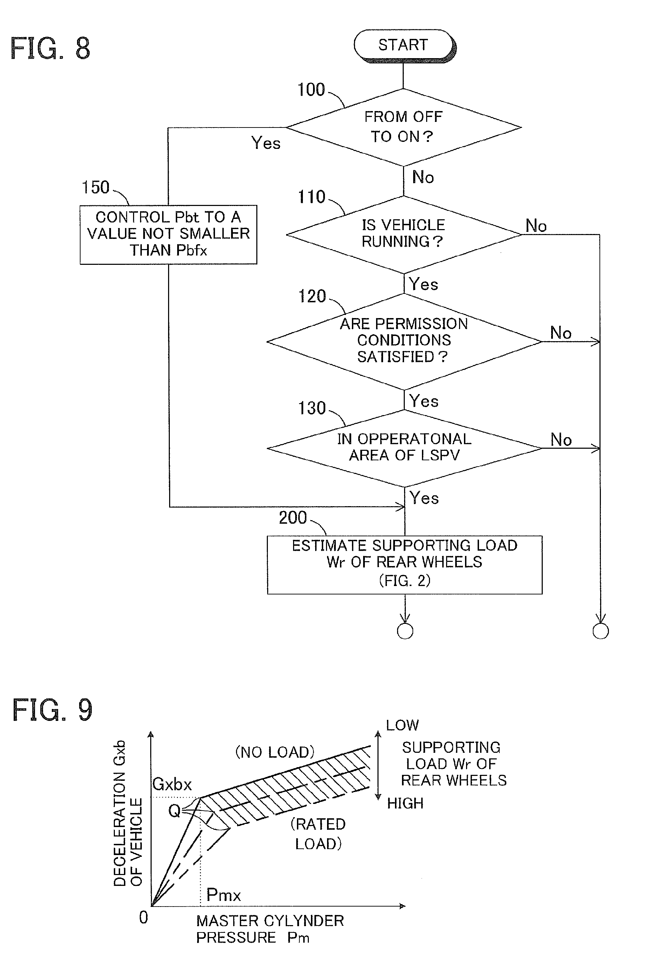

When the vehicle is running, the electronic control unit 30, by following a flowchart shown in FIG. 8, calculates supporting load Wr of the rear wheels on the basis of the braking pressure Pbf of the front wheels and the braking pressure Pbr of the rear wheels, and calculates longitudinal distances Lf and Lr between the gravity center of the vehicle 12 and front and rear axles in the same manner as the above-described first embodiment. Further, when the vehicle starts running, the electronic control unit 30, by following a flowchart shown in FIG. 8, controls the pressure Pbt to a value equal to or greater than the reference pressure Pbfx of LSPV 32, to thereby conduct the calculation of supporting load Wr of the rear wheels on the basis of the braking pressure Pbf of the front wheels and the braking pressure Pbr of the rear wheels, and the like.

As shown in FIG. 8, step 100 is conducted prior to step 110. In step 100, a decision is made as to whether or not the decision is conducted for the first time after the ignition switch is changed over from off to on. If a positive decision is made, the control proceeds to step 150, whereas if a negative decision is made, the control proceeds to step 110, and steps 110 to 130 and steps 210 to 240 are conducted similarly to the first embodiment.

In step 150, the brake actuator 22 is controlled so that the pressure Pbt is equal to or greater than the reference pressure Pbfx of LSPV 32, whereby the braking pressure Pbf of the front wheels (= Pbfl = Pbfr) and the braking pressure Pbr of the rear wheels (= Pbrl = Pbrr) are controlled to values within the operational area of LSPV 32. Then, the control proceeds to step 200, and steps 200 to 240 are conducted similarly to the first embodiment.

Therefore, according to the third embodiment, the distance Lf and the like can be calculated, similarly to the above-described first embodiment, under the situation where the vehicle is running; permission conditions for estimation are satisfied; and the braking pressures of the front and rear wheels are in the operational area of LSPV 32, and they can as well be calculated without requiring braking operation by the driver when the vehicle is to be started.

Fourth Embodiment

In the fourth embodiment, the braking apparatus, not shown, is configured in a manner similar to the braking apparatus 16 of the above-described first embodiment. However, LSPV 32 may be provided at the conduit for the rear wheels common to the left and right rear wheels 12RL and 12RR as in the third embodiment.

In the fourth embodiment, the braking force control part of the electronic control unit 30 stores, as a map, the relationship among master cylinder pressure Pm, deceleration Gxb of the vehicle and supporting load Wr of the rear wheels shown in FIG. 9 in a storage device such as ROM in place of the relationship among braking pressure Pbf of the front wheels, braking pressure Pbr of the rear wheels and supporting load Wr of the rear wheels shown in FIG. 2. The former relationship may as well be derived in advance for each vehicle by experiment.

As shown in FIG. 10, in the fourth embodiment, when the vehicle is running, steps 110 and 120 are conducted in the same manner as in the above-described first embodiment. However, in step 130, a decision is made as to whether or not the master cylinder pressure Pm and the deceleration Gxb (= -Gx) of the vehicle are in the hatched area shown in FIG. 9. If a negative decision is made, the control proceeds to step 170, whereas if a positive decision is made, the control proceeds to step 160.

In step 160, the deceleration Gxb at a breaking point Q is calculated from a map corresponding to FIG. 9 on the basis of the master cylinder pressure Pm and the deceleration Gxb of the vehicle. In step 200, as shown in FIG. 11, supporting load Wr of the rear wheels is calculated on the basis of the deceleration Gxb at a breaking point Q, and then the steps 210 to 240 are conducted as in the above-described embodiments. The relationship shown in FIG. 11 may also be derived in advance for each vehicle by experiment.

In step 170, the longitudinal force Fx of the vehicle which is braking force and a negative value is calculated on the basis of the braking pressure Pbf of the front wheels and the braking pressure Pbr of the rear wheels, and in step 180, total weight W of the vehicle is calculated according to the above-mentioned Equation 3.

Therefore, according to the fourth embodiment, the distance Lf and the like can be calculated on the basis of the master cylinder pressure Pm and the deceleration Gxb of the vehicle which corresponds to the sum of the braking pressure Pbf of the front wheels and the braking pressure Pbr of the rear wheels, similarly to the above-described first embodiment, under the situation where the vehicle is running; permission conditions for estimation are satisfied; and the braking pressures of the front and rear wheels are in the operational area of LSPV 32. In addition, total weight W of the vehicle can be calculated on the basis of the braking pressure Pbf of the front wheels, the braking pressure Pbr of the rear wheels and the deceleration Gxb of the vehicle under the situation where the vehicle is running and permission conditions for estimation are satisfied but the braking pressures of the front and rear wheels are not in the operational area of LSPV 32.

As is understood from the above, according to the embodiments, the distance Lf and the like can not only be calculated, but also the values which are used for controlling the vehicle and are influenced by weight-related physical quantities of the vehicle can be modified on the basis of the calculated distance Lf and the like. Therefore, even if the longitudinal position of the gravity center of the vehicle and the total weight W of the vehicle are changed due to getting on and off of passengers and/or variation of movable load, the vehicle control such as vehicular running dynamic control can optimally be performed at all times.

According to the above-described embodiments, in step 120, a decision is made as to whether or not permission conditions for estimating weight-related physical quantities are satisfied, and if a negative decision is made, the distance Lf and the like are not calculated. Therefore, under the situation where the vehicle is running and the braking pressures of the front and rear wheels are in the operational area of LSPV 32 but the distance Lf and the like can not accurately be calculated due to anti-skid control or turning, it is possible to prevent the matter from occurring that the distance Lf and the like are inaccurately calculated or the values used for controlling the vehicle are modified to improper values on the basis of the inaccurately calculated values.

According to the above-described embodiments, LSPV 32 is configured to change the relationship between the braking pressure Pbf of the front wheels and the braking pressure Pbr of the rear wheels in accordance with the supporting load of the rear wheels 12RL, 12RR. In general, the change in supporting load of the wheels due to getting on and off of passengers and/or variation of movable load is larger at the rear wheels than at the front wheels. Therefore, the supporting loads of the front wheels and the rear wheels can be calculated more accurately on the basis of the braking pressure Pbf of the front wheels and the braking pressure Pbr of the rear wheels as compared with the case where LSPV 32 is configured to change the relationship between the braking pressure Pbf of the front wheels and the braking pressure Pbr of the rear wheels in accordance with the supporting load of the front wheels 12FL, 12FR.

While the present invention has been described with reference to the above embodiments, it will be apparent to those skilled in the art that the present invention is not limited thereto, but may be embodied in various other forms without departing from the scope of the invention.

For example, in the above-described embodiments, the total weight W of the vehicle is calculated on the basis of the longitudinal force Fx of the vehicle and the longitudinal acceleration Gx of the vehicle when the vehicle is accelerated or braked. However, in a vehicle which has height sensors or load sensors at the wheel positions, the total weight W of the vehicle may be calculated on the basis of the values detected by the sensors when the vehicle is stationary or straight running at a constant speed.

Specifically, in the above-described third embodiment, in the case where the total weight W of the vehicle is calculated on the basis of the values detected by the height sensors or load sensors when the vehicle is stationary or straight running at a constant speed, supporting load Wr of the rear wheels and the like may preferably be calculated according the flowchart shown in FIG. 6 after the total weight W of the vehicle is calculated.

Alternatively, the relationship between the supporting load Wr of the rear wheels and the total weight W of the vehicle may be derived in advance for each vehicle by experiment and the total weight W of the vehicle may be calculated on the basis of the supporting load Wr of the rear wheels estimated in step 200.

In the above-described embodiments, forward and backward inclination of a road is not considered in calculation of the total weight W of the vehicle. However, the prerequisite for calculating the total weight W of the vehicle in the above-described embodiments may include an additional requirement that the vehicle is not climbing or descending.

In the above-described first to third embodiments, the total weight W of the vehicle is calculated according to the routine which is separate from the routine for calculating the distance Lf and the like. In these embodiments, when a negative decision is made in step 130, the total weight W of the vehicle may as well be calculated as in the above-described fourth embodiment.

In the above-described fourth embodiment, when a negative decision is made in step 130, the control according to the flowchart shown in FIG. 10 may once be terminated without conducting steps 170 and 180, and total weight W of the vehicle may be calculated as in the above-described first to third embodiments.

In the above-described embodiments, a procedure for calculating the supporting load Wf of the front wheels, the longitudinal distance Lf or the longitudinal distance Lr may be omitted and the modification of the values which are influenced by the weight-related physical quantities of the vehicle may also be omitted.

In the above-described embodiments, the distance Lf and the like are calculated on the basis of the braking pressure Pbf of the front wheels and the braking pressure Pbr of the rear wheels or the master cylinder pressure Pm and the deceleration Gxb of the vehicle, and the values which are influenced by the weight-related physical quantities of the vehicle are modified on the basis of the distance Lf and the like. However, the relationship of the values which are influenced by the weight-related physical quantities of the vehicle relative to the relationship between the braking pressure Pbf of the front wheels and the braking pressure Pbr of the rear wheels or between the master cylinder pressure Pm and the deceleration Gxb of the vehicle may be derived in advance, and the values which are influenced by the weight-related physical quantities of the vehicle may be modified on the basis of the relationship between the braking pressure Pbf of the front wheels and the braking pressure Pbr of the rear wheels or between the master cylinder pressure Pm and the deceleration Gxb of the vehicle.

In the above-described first, second, and fourth embodiments, LSPV 32 is provided at the conduit 24B for the rear wheels between the master cylinder and the brake actuator 22. However, the above-described first, second, and fourth embodiments may be applied to a vehicle having a braking apparatus 16 in which LSPV 32 is provided at the position in the third embodiment.

In the above-described embodiments, the supporting load Wr of the rear wheels and the like are calculated on the basis of the braking pressure Pbf of the front wheels and the braking pressure Pbr of the rear wheels or the master cylinder pressure Pm and the deceleration Gxb of the vehicle. However, the supporting load Wr of the rear wheels and the like may be calculated on the basis of the braking pressure Pbf of the front wheels and the sum of the braking pressure Pbf of the front wheels and the braking pressure Pbr of the rear wheels, or may be calculated on the basis of the braking pressure Pbf of the front wheels and the deceleration Gxb of the vehicle.

In the above-described embodiments, LSPV 32 is configured to change the relationship between the braking pressure Pbf of the front wheels and the braking pressure Pbr of the rear wheels in accordance with the supporting load of the rear wheels 12RL, 12RR. However, LSPV 32 may be configured to change the relationship between the braking pressure Pbf of the front wheels and the braking pressure Pbr of the rear wheels in accordance with the supporting load of the front wheels 12FL, 12FR. In the latter case, the supporting load Wf of the front wheels is estimated in step 200 and the supporting load Wr of the rear wheels is calculated in step 210.

Further, in the above-described fourth embodiment, the deceleration Gxb at the breaking point Q is calculated on the basis of the master cylinder pressure Pm and the deceleration Gxb of the vehicle and supporting load Wr of the rear wheels is calculated on the basis of the deceleration Gxb at the breaking point Q. However, supporting load Wr of the rear wheels may directly be calculated on the basis of the master cylinder pressure Pm and the deceleration Gxb of the vehicle.

## Claims

1. In a vehicle including a braking force changing device for changing the relationship between the braking force of front wheels and the braking force of rear wheels in accordance with the position of a displacement member which moves in accordance with the supporting load of one of the front wheels and the rear wheels, a weight-related physical quantity estimating system for estimating at least one of the longitudinal position of the gravity center of the vehicle, the supporting load of the front wheels, the supporting load of the rear wheels and the total weight of the vehicle, as a physical quantity relating to the weight of the vehicle on the basis of the braking forces of the front wheels and the rear wheels.

2. A weight-related physical quantity estimating system according to claim 1, wherein the vehicle has a shift-lock mechanism which permits shift operation of a transmission under the situation where the braking operation amount of the driver is equal to or greater than an unlock reference value; the braking force changing device changes said relationship under the situation where the braking operation amount of the driver is equal to or greater than a change reference value, which varies in accordance with the supporting load of said one of the front wheels and the rear wheels so that said change reference value is higher when said supporting load is high as compared with the case where said supporting load is low; and said unlock reference value is equal to or greater than a maximum change reference value which said change reference value assumes when said supporting load of said one of the front wheels and the rear wheels is a possible maximum value.

3. A weight-related physical quantity estimating system according to claim 1, wherein said braking force changing device changes said relationship under the situation where the braking operation amount of the driver is equal to or greater than a change reference value, and said weight-related physical quantity estimating system estimates the supporting load of one of the front wheels and the rear wheels on the basis of the braking forces of the front wheels and the rear wheels which are values under the situation where the braking operation amount of the driver is equal to or greater than said change reference value, and estimates at least the longitudinal position of the gravity center of the vehicle or the supporting load of the other of the front wheels and the rear wheels on the basis of the supporting load of said one of the front wheels and the rear wheels and a known total weight of the vehicle.

4. A weight-related physical quantity estimating system according to claim 1, wherein said braking force changing device changes said relationship under the situation where the braking operation amount of the driver is equal to or greater than a change reference value, and said weight-related physical quantity estimating system estimates the total weight of the vehicle on the basis of the braking force of the vehicle and the deceleration of the vehicle which are values under the situation where the vehicle is being braked and the braking operation amount of the driver is blow said change reference value.

5. In a vehicle including a braking force changing device for changing the relationship between the braking force of front wheels and the braking force of rear wheels in accordance with the position of a displacement member which moves in accordance with the supporting load of one of the front wheels and the rear wheels, a control device for modifying a value which is used for controlling the vehicle and is influenced by the physical quantities relating to the vehicle weight, on the basis of the braking forces of the front wheels and the rear wheels.

6. A control device according to claim 5, wherein said control device estimates at least one of the longitudinal position of the gravity center of the vehicle, the supporting load of the front wheels, the supporting load of the rear wheels and the total weight of the vehicle, as a physical quantity relating to the weight of the vehicle on the basis of the braking forces of the front wheels and the rear wheels, and modifies the value which is used for controlling the vehicle on the basis of the estimated value or values.

7. A control device according to claim 6, wherein said braking force changing device changes said relationship under the situation where the braking operation amount of the driver is equal to or greater than a change reference value, and said control device estimates the supporting load of one of the front wheels and the rear wheels on the basis of the braking forces of the front wheels and the rear wheels which are values under the situation where the braking operation amount of the driver is equal to or greater than said change reference value, and estimates at least the longitudinal position of the gravity center of the vehicle or the supporting load of the other of the front wheels and the rear wheels on the basis of the supporting load of said one of the front wheels and the rear wheels and a known total weight of the vehicle.

8. A control device according to claim 6, wherein said braking force changing device changes said relationship under the situation where the braking operation amount of the driver is equal to or greater than a change reference value, and said control device estimates the total weight of the vehicle on the basis of the braking force of the vehicle and the deceleration of the vehicle which are values under the situation where the vehicle is being braked and the braking operation amount of the driver is smaller than said change reference value.

FIG. 1

FIG. 2

# FIG. 3

START

110 — IS VEHICLE RUNNING ? — No

Yes

120 — ARE PERMISSION CONDITIONS SATISFIED ? — No

Yes

130 — IN OPPERATONAL AREA OF LSPV — No

Yes

200 — ESTIMATE SUPPORTING LOAD Wr OF REAR WHEELS (FIG. 2)

210 — ESTIMATE SUPPORTING LOAD Wf OF FRONT WHEELS (Wf=W−Wr)

220 — CAL. DISTANCE Lf (Lf=WrL/W)

230 — CAL. DISTANCE Lr (Lr=L−Lf)

240 — MODIFY VALUES USED FOR CONTROLLING VEHICLE

RETURN

FIG. 4

```
                          ┌─────────┐
                          │  START  │
                          └─────────┘
                               │
         310                   ▼
              ◇─────────────────────────◇   No
              ◇   STRAIGHT RUNNING ?     ◇──────┐
              ◇─────────────────────────◇       │
                          │ Yes                  │
         320              ▼                       │
              ◇─────────────────────────◇        │
       Yes    ◇  STEADY ACCELERATING ?   ◇       │
      ┌───────◇─────────────────────────◇        │
      │                   │ No                    │
      │       340         ▼                        │
      │            ◇─────────────────◇   No        │
      │            ◇  STEADY BRAKING ?◇──────────► │
      │            ◇─────────────────◇             │
      │                   │ Yes                    │
      │       350         ▼                        │
      │            ◇─────────────────────◇  Yes    │
      │            ◇ IN OPPERATONAL       ◇──────► │
      │            ◇   AREA OF LSPV       ◇         │
      │            ◇─────────────────────◇         │
      │  330              │ No       360           │
      ▼                   ▼                        │
┌──────────────┐   ┌──────────────┐               │
│  ESTIMATE    │   │  ESTIMATE    │               │
│ LONGITUDINAL │   │ LONGITUDINAL │               │
│ FORCE FX OF  │   │ FORCE FX OF  │               │
│  VEHICLE     │   │  VEHICLE     │               │
└──────────────┘   └──────────────┘               │
      │                   │                        │
      └──────────┐   ┌────┘                        │
        370      ▼   ▼                             │
        ┌────────────────────┐                     │
        │ ESTIMATE TOTAL      │                     │
        │ WEIGHT W OF VEHICLE │                     │
        │ (W=Fx·g/Gx)         │                     │
        └────────────────────┘                     │
        380      │                                  │
        ┌────────────────────┐                     │
        │ MODIFY VALUES USED  │                     │
        │ FOR CONTROLLING     │                     │
        │ VEHICLE             │                     │
        └────────────────────┘                     │
                 │                                  │
                 ▼◄─────────────────────────────────┘
          ┌─────────┐
          │ RETURN  │
          └─────────┘
```

# FIG. 5

# FIG. 6

START

110 — IS VEHICLE RUNNING ?
No / Yes

120 — ARE PERMISSION CONDITIONS SATISFIED ?
No / Yes

130 — IN OPPERATONAL AREA OF LSPV
No / Yes

140 — $Pbf \geqq Pbfx$ ?
Yes / No

200 — ESTIMATE SUPPORTING LOAD Wr OF REAR WHEELS (FIG. 2)

RETURN

## FIG. 7

ACCELERATOR OPENING SENSOR — $\phi$

STEERING ANGLE SENSOR — $\theta$

PRESSURE SENSOR — Pbi

ELECRTRONIC CONTROL UNIT 30

Pm / Pbf — PRESSURE SENSOR

Pbr — PRESSURE SENSOR

Gx — LATERAL ACC. SENSOR

## FIG. 8

START

100 — FROM OFF TO ON?

Yes →

150 — CONTROL Pbt TO A VALUE NOT SMALLER THAN Pbfx

No ↓

110 — IS VEHICLE RUNNING? — No →

Yes ↓

120 — ARE PERMISSION CONDITIONS SATISFIED? — No →

Yes ↓

130 — IN OPPERATONAL AREA OF LSPV — No →

Yes ↓

200 — ESTIMATE SUPPORTING LOAD Wr OF REAR WHEELS (FIG. 2)

## FIG. 9

DECELERATION Gxb OF VEHICLE

Gxbx

Q

(NO LOAD)

(RATED LOAD)

LOW
SUPPORTING LOAD Wr OF REAR WHEELS
HIGH

Pmx

0    MASTER CYLYNDER PRESSURE  Pm

## FIG. 10

START

110 — IS VEHICLE RUNNING ? — No

Yes

120 — ARE PERMISSION CONDITIONS SATISFIED ? — No

Yes

130 — IN OPPERATONAL AREA OF LSPV

No / Yes

170 ESTIMATE LONGITUDINAL FORCE FX OF VEHICLE

160 ESTIMATE BRAKING POINT Q (FIG. 9)

180 ESTIMATE TOTAL WEIGHT W OF VEHICLE $(W=Fx \cdot g/Gx)$

200 ESTIMATE SUPPORTING LOAD Wr OF REAR WHEELS (FIG. 11)

RETURN

## FIG. 11

DECELERATION Gxb AT BRAKING POINT Q

0

SUPPORTING LOAD Wr OF REAR WHEELS

**INTERNATIONAL SEARCH REPORT**

| | International application No. |
|---|---|
| | PCT/JP2009/057716 |

A. CLASSIFICATION OF SUBJECT MATTER
*B60T8/171*(2006.01)i, *B60K20/02*(2006.01)i, *B60T8/30*(2006.01)i, *B60W40/12*
(2006.01)i, *G01G19/03*(2006.01)i

According to International Patent Classification (IPC) or to both national classification and IPC

B. FIELDS SEARCHED

Minimum documentation searched (classification system followed by classification symbols)
B60T8/171, B60K20/02, B60T8/30, B60W40/12, G01G19/03

Documentation searched other than minimum documentation to the extent that such documents are included in the fields searched
Jitsuyo Shinan Koho        1922-1996   Jitsuyo Shinan Toroku Koho   1996-2009
Kokai Jitsuyo Shinan Koho  1971-2009   Toroku Jitsuyo Shinan Koho   1994-2009

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y<br>A | JP 10-90044 A  (Isuzu Motors Ltd.),<br>10 April, 1998 (10.04.98),<br>Par. No. [0012]; Fig. 1<br>(Family: none) | 1,4-6,8<br>2-3,7 |
| Y<br>A | JP 10-338121 A  (Nissan Motor Co., Ltd.),<br>22 December, 1998 (22.12.98),<br>Par. Nos. [0049] to [0052]<br>(Family: none) | 1,4-6,8<br>2-3,7 |
| A | JP 2005-313753 A  (Toyota Motor Corp.),<br>10 November, 2005 (10.11.05),<br>Par. No. [0051]; Fig. 3<br>(Family: none) | 2 |

☐ Further documents are listed in the continuation of Box C.     ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered   to be of particular relevance | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 07 August, 2009 (07.08.09) | 18 August, 2009 (18.08.09) |

| Name and mailing address of the ISA/<br>Japanese Patent Office | Authorized officer |
|---|---|
| Facsimile No. | Telephone No. |

Form PCT/ISA/210 (second sheet) (April 2007)

**EP 2 418 133 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2005229446 A